# EUROPEAN PATENT APPLICATION

(11) **EP 4 785 838 A1**
(43) Date of publication of application: **05.08.2026**
(21) Application number: 26153474.7
(22) Date of filing: 22.01.2026
(51) Int. Cl.: A47L 7/00

(54) **APPARATUS FOR DUST-FREE PROCESSING**

(30) Priority: 03.02.2025 FI 20255080
(71) Applicant: Mirka Ltd, 66850 Jepua (FI)
(72) Inventor: LINQVIST, Tommy, 66900 Nykarleby (FI); BÄCK, Simon, 66600 Vörå (FI); SÖDERGÅRD, Tomas, 66900 Nykarleby (FI)
(74) Representative: Berggren Oy

(57) **Abstract**

An apparatus (1000) comprises a dust extractor (500) to extract dust particles (DUST1) formed by processing a workpiece (OBJ1) with a power tool (TOOL1). The dust extractor (500) comprises a first motor (M1), a suction fan (FAN1), a first communication unit (RXTX1), and a first control unit (CNT1), wherein the first communication unit (RXTX1) is arranged to establish a communication link (LINK1) with a second communication unit (RXTX2) of the power tool (TOOL1), wherein the first control unit (CNT1) is arranged to receive a start signal (COM1a) from the power tool (TOOL1) via the communication link (LINK1), wherein the first control unit (CNT1) is arranged to start rotation of the suction fan (FAN1) based on the received start signal (COM1a), wherein the suction fan (FAN1) is arranged to draw an air flow (AIR1) via the apparatus (1000), and wherein the first control unit (CNT1) is arranged to send a permission signal (COM2a) to the power tool (TOOL1) via the communication link (LINK1) after rotation of the suction fan (FAN1) has been started, in order to allow a motor (M2) of the power tool (TOOL1) to start rotating.

## Description

### FIELD

The present method and apparatus relate to extracting dust, which is generated by processing a workpiece with a power tool.

### BACKGROUND

Active operation of a power tool may form dust particles from a workpiece. A fraction of the formed dust particles may be emitted to the environment. Emitted dust particles may contaminate the environment. Certain type of emitted dust may also be harmful to the human health.

A dust extractor may be arranged extract dust, which is produced when the workpiece is processed with a power tool. The dust extractor comprises a suction fan to cause an air flow, for extracting the dust. The dust-extractor may have an auto-start functionality, which is based on detecting an increase of the electric power drawn by the power tool. The dust extractor may be arranged to measure the electric power drawn by the power tool. Starting the rotation of the motor of the power tool increases the power consumption of the power tool. The dust extractor may be arranged to start rotation of the suction fan when the electric power of the power tool exceeds a predetermined threshold. It takes some time after starting the rotation of the suction fan before the dust extractor can draw a sufficient air flow rate. Establishing a sufficient vacuum (low pressure) may take e.g. 1 s after the start of the rotation of the suction fan. On the other hand, the power tool may start to generate dust almost immediately after the rotation of the motor of the power tool has been started. Thus, there may be a significant time delay between starting the rotation of the motor of the power tool and providing a sufficient air flow rate from the power tool to the dust extractor. Consequently, the power tool may emit a harmful dust plume to the environment during the first seconds of active operation of the power tool.

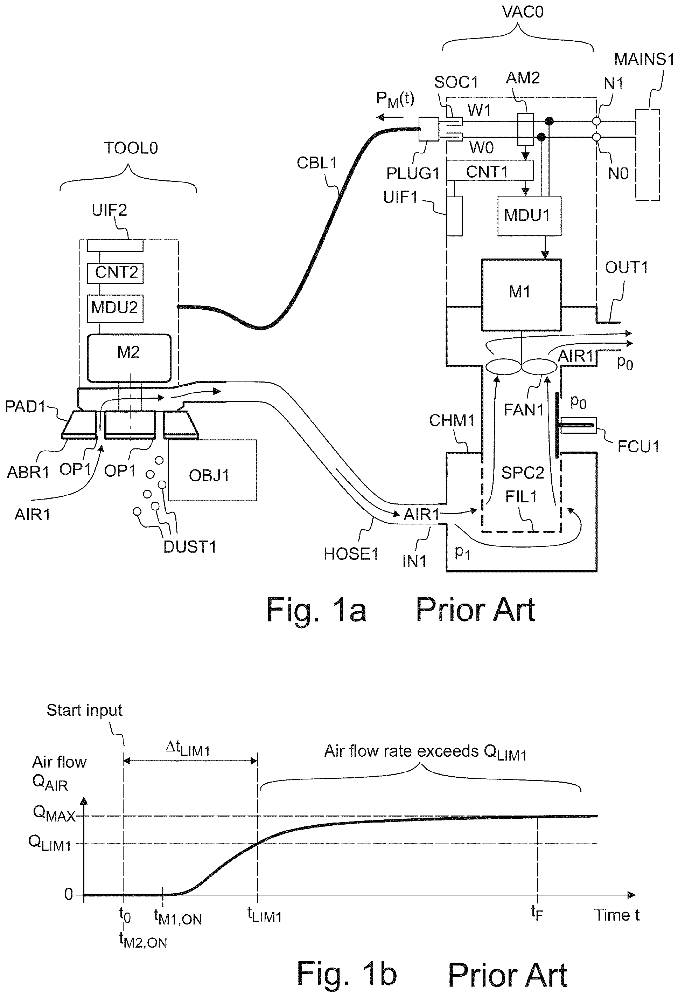

Referring to Fig. 1a, a known dust extractor VAC0 is arranged to start rotation of the suction fan FAN1 based on measured electric current of a known power tool TOOLO. The known dust extractor VAC0 starts rotation of the suction fan FAN1 when the motor M2 of the power tool starts to rotate so that measured electric current of the power tool TOOL1 exceeds a threshold value. The symbols shown in Figs. 1a and 1b will be explained later in the description.

Fig. 1b shows temporal evolution of an air flow rate Q_{AIR} drawn via the known dust extractor VAC0. A user presses a start button of a known power tool TOOLO at a time t₀. Rotation of the motor M2 of the known power tool TOOLO starts immediately when the user has pressed the start button. The electric current of the motor M2 increases rapidly at the time t_{M2,ON}. The known dust extractor VAC0 starts rotation of the suction fan FAN1 at the time t_{M1,ON} after the dust extractor VAC0 has detected that the measured electric current of the power tool TOOL1 exceeds the threshold value. Acceleration of the suction fan FAN1 takes some time, and the air flow rate Q_{AIR} via the dust extractor reaches a limit value Q_{LIM1} later at a time t_{LIM1}. Thus, there is a significant time delay Δt_{LIM1} between starting the rotation of the motor M2 of the known power tool TOOLO at the time t_{M2,ON} and reaching the air flow rate Q_{LIM1} at the time t_{LIM1}. The power tool TOOLO may start to generate dust particles DUST1 almost immediately at the time t_{M2,ON}, but a high air flow rate for extracting the dust may be provided only later after the time t_{LIM1}. Thus, there may be a high risk of emitting dust particles DUST1 to the environment immediately after the rotation of the motor M2 has been started.

### SUMMARY

An object is to provide an apparatus for dust-free processing of a workpiece. An object is to provide a method for dust-free processing of a workpiece. An object is to provide an apparatus for extracting dust, which generated by processing a workpiece with a power tool. An object is to provide a method for extracting dust, which generated by processing a workpiece with a power tool.

According to an aspect, there is provided an apparatus (1000) comprising a dust extractor (500) to extract dust particles (DUST1) formed by processing a workpiece (OBJ1) with a power tool (TOOL1),
wherein the dust extractor (500) comprises a first motor (M1), a suction fan (FAN1), a first communication unit (RXTX1), and a first control unit (CNT1),
wherein the first communication unit (RXTX1) is arranged to establish a communication link (LINK1) with a second communication unit (RXTX2) of the power tool (TOOL1),
wherein the first control unit (CNT1) is arranged to receive a start signal (COM1a) from the power tool (TOOL1) via the communication link (LINK1),
wherein the first control unit (CNT1) is arranged to start rotation of the suction fan (FAN1) based on the received start signal (COM1a),
wherein the suction fan (FAN1) is arranged to draw an air flow (AIR1) via the apparatus (1000), and wherein the first control unit (CNT1) is arranged to send a permission signal (COM2a) to the power tool (TOOL1) via the communication link (LINK1) after rotation of the suction fan (FAN1) has been started, in order to allow a motor (M2) of the power tool (TOOL1) to start rotating.

According to an aspect, there is provided an apparatus of claim 1.

Further aspects are defined in the other claims.

The scope of protection sought for various embodiments of the invention is set out by the independent claims. The embodiments, if any, described in this specification that do not fall under the scope of the independent claims are to be interpreted as examples useful for understanding various embodiments of the invention.

The apparatus comprises a dust extractor to draw a dust-laden air flow from a power tool, and to communicate with the power tool via a communication link. The apparatus may further comprise the power tool. The dust extractor may be connected to the power tool via a hose, so as to extract the dust particles, which are formed when a workpiece is processed with the power tool.

The power tool may be arranged to send a start signal to the dust extractor when a user provides a start input via the user interface of the power tool. The power tool may be arranged to send a start signal e.g. when the user presses a control button of the power tool.

The power tool may be connected the dust extractor via communication link so that the dust extractor can receive the start signal from the power tool. In an embodiment, the start signal may be communicated from the power tool to the dust extractor via a wireless communication link, e.g. via Wi-fi or Bluetooth (registered trademarks).

The user may provide a start input via a user interface of the power tool, e.g. by pressing a control button. The power tool may form a start signal based on the start input. The dust extractor may receive the start signal and the dust extractor may start rotation of the suction fan based on the start signal.

The dust extractor may send a permission signal to the power tool in a delayed manner after the rotation of the suction fan has been started. The dust extractor may send a permission signal to the power tool in a delayed manner in response to starting rotation of the suction fan. The power tool may delay the start of the rotation of the motor of the power tool until the permission signal is received from the dust extractor. The power tool may be arranged to allow rotation of a motor of the power tool only if the permission signal is received from the dust extractor. The time delay between receiving the start signal and sending the permission signal may reduce or eliminate emission of dust to the environment when the rotation of the motor of the power tool is started.

The dust extractor may optionally comprise a flow sensor for measuring the air flow rate, which is caused by the suction fan. It takes some time before the rotation of the fan accelerates and before the dust extractor provides sufficient vacuum, so that the air flow rate can exceed a minimum limit value for safe operation. The time delay between starting the rotation of the suction fan and providing a sufficient air flow rate may be e.g. in the range of 0.2 s to 2 s. The dust extractor may send a permission signal for starting the power tool only when the measured air flow rate exceeds a minimum limit value. The power tool may be arranged to start rotation of the motor of the power tool in a delayed manner only when the power tool receives the permission signal from the dust extractor.

The dust extractor may draw the generated dust together with an air flow from the power tool to the dust extractor e.g. via a hose. The dust extractor should draw a sufficient air flow rate, in order to ensure safe operation. The dust extractor does not provide a sufficient air flow rate immediately after the start of the rotation of the suction fan. Establishing a sufficient vacuum (i.e. forming a low pressure) may take e.g. 0.5 s to 2 s after start of the rotation of the suction fan.

The delayed controlled start of the active operation of the power tool may ensure that a major fraction of the dust particles generated during the first seconds of the active operation may be extracted effectively to the dust extractor together with the air flow. The present apparatus may reduce or avoid emission of dust to the environment when an active processing with the power tool starts.

The dust extractor may form the permission signal based on a measured air flow rate. The permission signal may indicate to the power tool when the dust extractor is ready to receive the dust from the power tool with a sufficient suction power.

The power tool may be e.g. an abrading device. The power tool may comprise a motor for causing relative movement of a processing element with respect to a workpiece. The processing element may be an abrasive element, which in turn comprises abrasive grains. The power tool may be e.g. an orbital sander or a rotary sander. The power tool may be e.g. a belt sander. Yet, the power tool may be e.g. a saw or a drill. The processing element may be e.g. a saw blade or a drill bit.

The present method may ensure providing a sufficient air flow rate during the whole active operation of the power tool, including the first seconds of active operation of the power tool. The present method may reduce or minimize risk of emitting a harmful dust plume during the first seconds of active operation of the power tool.

In an embodiment, the power tool may be arranged to send also parameter data to the dust extractor via the communication link. The parameter data may e.g. specify a minimum air flow rate needed to safe operation of the power tool, which is connected to the dust extractor. A first power tool may have a first (minimum) limit value for the required air flow rate, and a second power tool may have a second different (minimum) limit value for the required air flow rate.

According to a comparative example, the rotation of the suction fan is started based on a measured electrical power of the power tool or based on mechanical vibrations caused by the power tool.

According to the present method, the dust extractor may determine the start time of the suction fan based on the start signal, without a need to measure e.g. the electric power drawn by the power tool, and/or without a need to detect e.g. mechanical vibrations of the power tool.

### BRIEF DESCRIPTION OF THE DRAWINGS

In the following examples, several variations will be described in more detail with reference to the appended drawings, in which
- Fig. 1a: shows, by way of example, a processing apparatus of prior art,
- Fig. 1b: shows, by way of example, timing of events during a conventional auto-start,
- Fig. 2: shows, by way of example, the apparatus for dust-free processing,
- Fig. 3a: shows, by way of example, timing of events during a start of the dust-free processing,
- Fig. 3b: shows, by way of example, timing of events during a start of the dust-free processing, wherein the air flow rate is limited to a target value which is smaller than the maximum air flow rate,
- Fig. 4: shows, by way of example, temporal evolution of a pressure difference generated by the dust extractor,
- Fig. 5a: shows, by way of example, timing of events during a normal shutdown,
- Fig. 5b: shows, by way of example, timing of events in an abnormal situation where transmission of the permission signal is interrupted,
- Fig. 6: shows, by way of example, method steps for dust-free processing,
- Fig. 7: shows, by way of example, the control system of the apparatus,
- Fig. 8a: shows, by way of example, a communication link implemented via a data cable,
- Fig. 8b: shows, by way of example, a communication link implemented via a power cable,
- Fig. 9: shows, by way of example, in a three-dimensional view, the apparatus for dust-free processing.

### DETAILED DESCRIPTION

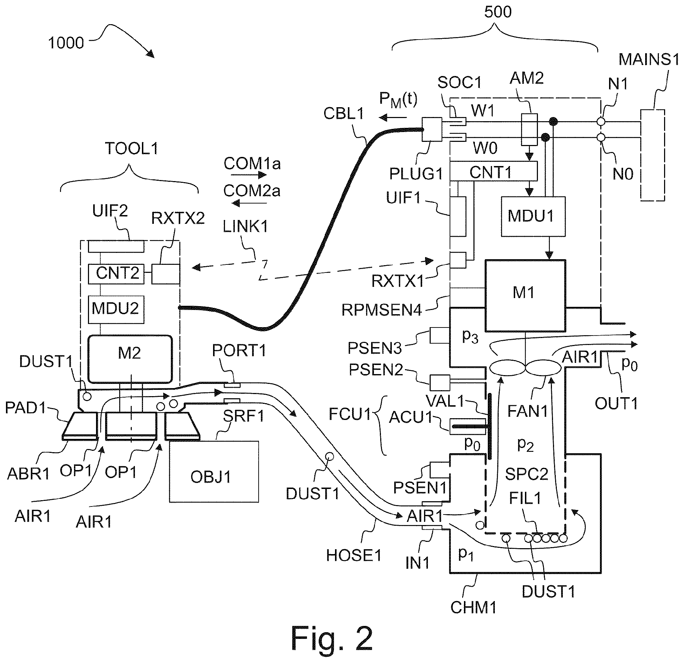

Referring to Fig. 2, the apparatus 1000 comprises a dust extractor 500. The apparatus 1000 may further comprise a power tool TOOL1. The power tool TOOL1 may be arranged to process a surface SRF1 of a workpiece OBJ1. The apparatus 1000 may be e.g. a surface processing apparatus. Active processing of a workpiece OBJ1 with the power tool TOOL1 may generate dust particles DUST1. The dust particles DUST1 may be carried by an air flow AIR1 to the dust extractor 500. The dust extractor 500 may comprise an air inlet IN1 and an inlet chamber CHM1. The dust extractor 500 may be arranged to draw the dust-laden air flow AIR1 from the power tool TOOL1 to the inlet IN1 e.g. via a hose HOSE1.

The dust extractor 500 comprises a suction fan FAN1, a motor M1 to rotate the suction fan FAN1, and a control unit CNT1 to control rotation of the suction fan FAN1. The suction fan FAN1 is arranged to draw the air flow AIR1 via the dust extractor 500.

The rotating suction fan FAN1 may cause a partial vacuum (p₁), which in turn may draw an air flow AIR1 through the hose HOSE1 connected to the dust extractor 500. The fan FAN1 may cause an air flow rate Q_{AIR} through the hose HOSE1 and through the suction fan FAN1. The fan FAN1 may be e.g. an axial fan and/or a centrifugal fan. The air flow AIR1 may be started by starting rotation of the fan FAN1. The air flow AIR1 may be stopped by stopping rotation of the fan FAN1.

The dust extractor 500 may be arranged to suck dust particles DUST1 carried by the air flow AIR1. The dust extractor 500 may also be called e.g. as a vacuum cleaner.

The dust extractor 500 may comprise a particle separator FIL1 to separate dust DUST1 from the dust-laden air flow AIR1. The dust extractor 500 may comprise a filter FIL1 to separate dust particles DUST1 from the air flow AIR1. Alternatively, or in addition, the dust extractor 500 may comprise a cyclone to separate dust particles DUST1 from the air flow AIR1. The particle separator FIL1 may comprise e.g. a dust filter and/or a cyclone. The filter and/or the cyclone may collect the separated dust particles DUST1. The suction fan FAN1 may draw the air flow AIR1 through the particle separator FIL1. The suction fan FAN1 may draw the air flow AIR1 through the filter FIL1 and/or through a cyclone. The inlet chamber CHM1 may guide the dust-laden air flow AIR1 from the inlet IN1 to the filter FIL1 and/or cyclone. The inlet chamber CHM1 may also serve as a dust collection chamber for the dust which has been separated from the air flow AIR1.

The apparatus 1000 may comprise the hose HOSE1. The hose HOSE1 may convey an air flow AIR1 and dust particles DUST1 from the power tool TOOL1 to the dust extractor 500. The hose HOSE1 may convey an air flow AIR1 and dust particles DUST1 from a working area of the power tool TOOL1 to the dust extractor 500. The hose HOSE1 may be detachably connectable to the inlet IN1. The hose HOSE1 may operate as a flexible conduit between a port PORT1 of the power tool TOOL1 and the inlet IN1 of the dust extractor 500.

The dust extractor 500 may have an air outlet OUT1 for discharging the particle-free air flow AIR1 to the surroundings, after the dust particles DUST1 carried by the air flow AIR1 have been separated from the air flow AIR1.
p₀ denotes the ambient atmospheric pressure. Pressure near the power tool TOOL1 and at the air outlet OUT1 of the dust extractor 500 may be substantially equal to the atmospheric pressure p₀. The control system of the dust extractor 500 may also comprise a pressure sensor for measuring the ambient pressure in real time. The ambient pressure p₀ is typically in the order of 100 kPa.

p₁ denotes an internal pressure of the inlet chamber CHM1 of the dust extractor 500. The pressure p₁ may also denote the upstream pressure of the filter FIL1. The pressure difference p₀ - p₁ may draw the dust-laded air flow AIR1 from the abrasive article ABR1 to the inlet chamber CHM1 via the hose HOSE1.

The rotating fan FAN1 may cause the partial vacuum p₂ in the internal space SPC2 between the filter FIL1 and the fan FAN1. p₂ denotes also an upstream pressure of the fan FAN1 and a downstream pressure of the filter FIL1. The pressure p₂ may be the lowest pressure of the apparatus 1000. p₃ denotes a downstream pressure of the fan FAN1. The downstream pressure (p₃) of the fan FAN1 may be substantially equal to the ambient pressure p₀.

The upstream pressure p₁ of the filter FIL1 may be e.g. in the range of 80 kPa to 90 kPa during normal dust extraction. The upstream pressure p₂ of the fan FAN1 may be slightly lower than the pressure p₁ during the normal dust extraction. The ambient pressure p₀ may be approximately equal to 100 kPa.

The dust extractor 500 comprises a first communication unit RXTX1. The first communication unit RXTX1 may be arranged to establish a communication link LINK1 with a second communication unit RXTX2 of the power tool TOOL1. The control unit CNT1 of the dust extractor 500 may be arranged to receive a start signal COM1a from the power tool TOOL1 via the communication link LINK1. The control unit CNT1 of the dust extractor 500 may be arranged to start rotation of the suction fan FAN1 based on the received start signal COM1a.

The control unit CNT1 may be arranged to send a permission signal COM2a to the power tool TOOL1 via the communication link LINK1 after rotation of the suction fan FAN1 has been started, for allowing a delayed start of rotation of the motor M2 of the power tool TOOL1. A time delay (Δt_{C1C2}) between receiving the start signal COM1a and sending the permission signal COM2a may be e.g. in the range of 0.2 s to 5 s.

The communication link LINK1 may be e.g. a wireless communication link. The wireless communication of the link LINK1 may be implemented e.g. via radio communication, e.g. via Wi-fi or Bluetooth (registered trademarks). The wireless communication link may operate easily and reliably in the demanding environmental conditions of a workshop or a building site. The wireless communication link may be established without using a data cable between the dust extractor and the power tool. Consequently, problems caused by breaking the data cable may be avoided. Consequently, problems caused by dirty data connectors of the data cable may be avoided. The risk of getting entangled in the data cable can be avoided.

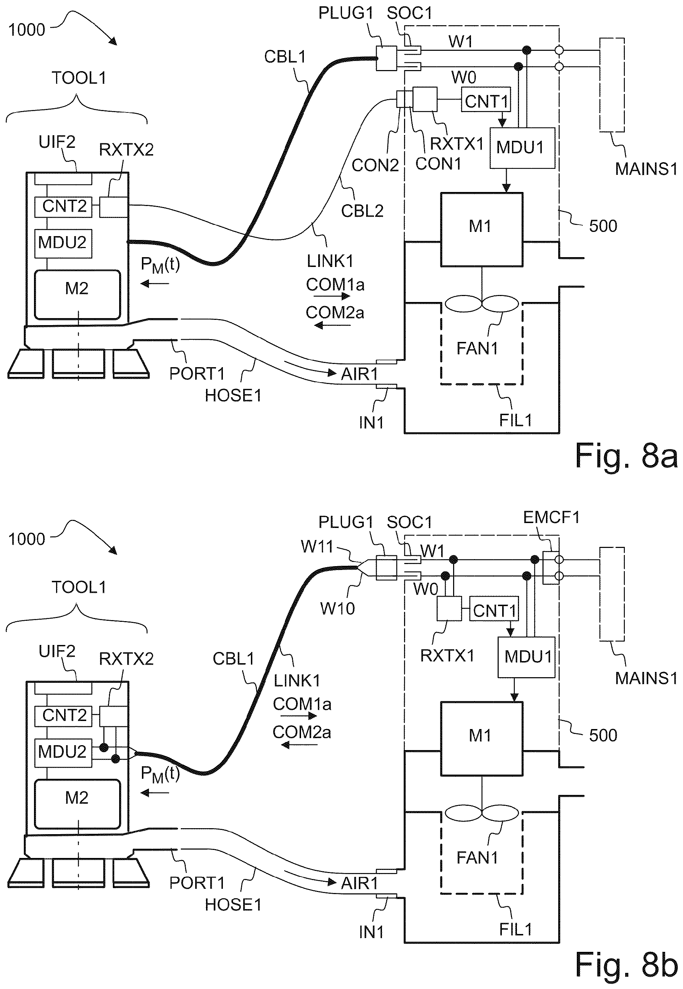

Alternatively, the communication link LINK1 may be implemented via a cable (Figs. 8a and 8b).

The power tool TOOL1 may comprise a user interface UIF2 for receiving a start input INPUT1, a motor M2, a communication unit RXTX2, and a control unit CNT2. The control unit CNT2 may be arranged to start rotation of the motor M2 of the power tool TOOL1 based on the start input INPUT1 only if the permission signal COM2a is received from the dust extractor 500 to the power tool TOOL1.

The power tool TOOL1 may be arranged to send the start signal COM1a to the dust extractor 500 in response to a start input INPUT1 received via the user interface UIF2 of the power tool TOOL1. For example, the power tool TOOL1 may be arranged to send the start signal COM1a to the dust extractor 500 in response to pressing a button UIF2a of the user interface UIF2 of the power tool TOOL1.

The power tool TOOL1 may be used for processing a surface SRF1 of the workpiece OBJ1. The apparatus 1000 may be a surface processing apparatus. The power tool TOOL1 may comprise a processing element ABR1 for processing a workpiece OBJ1. The motor M2 of the power tool TOOL1 may be arranged to cause relative motion of a processing element ABR1 with respect to a surface SRF1 of a workpiece OBJ1. The motor M2 may be arranged to cause vibrational, rotational and/or linear motion of the processing element ABR1. The power tool TOOL1 may optionally comprise an intermediate element PAD1 for fixing the processing element ABR1 to the power tool TOOL1. The intermediate element PAD1 may comprise e.g. backing pad, a chuck, or a spindle. The processing element ABR1 may be supported by the intermediate element PAD1. The processing element ABR1 may be attached to the intermediate element PAD1. The motor M2 may be arranged to cause vibrational, rotational and/or linear motion of the intermediate element PAD1. The motor M2 may be arranged to cause vibrational, rotational and/or linear motion of the processing element ABR1 which is attached to the backing pad PAD1.

For example, the power tool TOOL1 may comprise an abrasive article ABR1, which comprises abrasive grains. The power tool TOOL1 may be e.g. a sander or a grinding device. The processing element ABR1 may be e.g. an abrading element, which comprises a plurality of abrasive grains. The power tool TOOL1 may comprise a supporting pad PAD1. The abrasive article ABR1 may be attached to the pad PAD1. The motor M2 may may be arranged to cause a movement of the abrasive article ABR1 with respect to the surface SRF1. The motor M2 may may be arranged to cause rotary and/or oscillatory movement of the abrasive article ABR1 with respect to the surface SRF1. Pressing the abrasive article ABR1 against the surface SRF1 may generate dust particles DUST1, which may comprise particles released from the surface SRF1.

The power tool TOOL1 may generate dust particles DUST1 e.g. when the processing element ABR1 is pressed against the workpiece OBJ1 and the motor M2 is rotating. The power tool TOOL1 may comprise one or more openings OP1 for drawing the suction air flow AIR1. The power tool TOOL1 may comprise one or more openings OP1 for extracting released particles DUST1 together with the air flow AIR1. The intermediate element PAD1 and/or the processing element ABR1 may have one or more openings OP1 for drawing dust particles DUST1 with the air flow AIR1. The power tool may comprise an outlet port PORT1 connectable to a hose HOSE1. Dust particles DUST1 carried by the air flow AIR1 may be sucked via the openings OP1, via the outlet port PORT1, and via a hose HOSE1 to the dust extractor 500.

The power tool TOOL1 may be an electrically powered tool, which needs dust extraction. Rotation of the motor M2 of the power tool TOOL1 may involve a risk of generating dust particles DUST1. The power tool TOOL1 may be e.g. a grinding device. The power tool TOOL1 may be e.g. an orbital sander or a rotating sander. The power tool TOOL1 may be e.g. an electric drill or an electric saw. The power tool TOOL1 may be e.g. a sander device, a grinding device, tile cutter, a milling machine, a router, a saw, a rotary saw, a bandsaw, an oscillating saw, a drill.

The power tool TOOL1 may comprise a user interface UIF2 for receiving user input and/or for providing information to the user. The control unit CNT2 may control rotation of the motor M2 based on user input received via the user interface UIF2 and based on the permission signal COM2a received from the dust extractor 500. The control unit CNT2 may start rotation of the motor M2 when a user input is provided via the user interface UIF2 (e.g. by pressing a button) and when the permission signal COM2a allows rotation of the motor M2. The control unit CNT2 may stop rotation of the motor M2 when the user stops pressing the button of the user interface UIF2 and/or when the permission signal COM2a is not received.

The dust extractor 500 may comprise a motor driving unit MDU1 for driving the motor M1 according to a control signal received from the control unit CNT1. The power tool TOOL1 may comprise a motor driving unit MDU2 for driving the motor M2 according to a control signal received from the control unit CNT2.

The dust extractor 500 may comprise an electric outlet SOC1 connectable to a power tool TOOL1. An electric cable CBL1 and a connector PLUG1 of the power tool TOOL1 may be connected to the electric outlet SOC1 of the dust extractor 500. The power tool TOOL1 may receive electric power via a cable CBL1. A connector PLUG1 of the cable CBL1 may be connected to the mains network MAINS1. The dust extractor 500 may distribute electric current to the outlet SOC1 e.g. via nodes N0, N1 and conductors WO, W1.

The power tool TOOL1 may be connected to receive electric power e.g. from a connector SOC1 of the dust extractor 500, or the power tool TOOL1 may be connected directly to the mains network MAINS1. Yet, the power tool TOOL1 may also be powered by its own battery.

The dust extractor 500 and the power tool TOOL1 may be produced separately and transported to a processing site separately. The power tool TOOL1 may be connected to the dust extractor 500 at the processing site. The dust extractor 500 may also be connectable to various different power tools TOOL1.

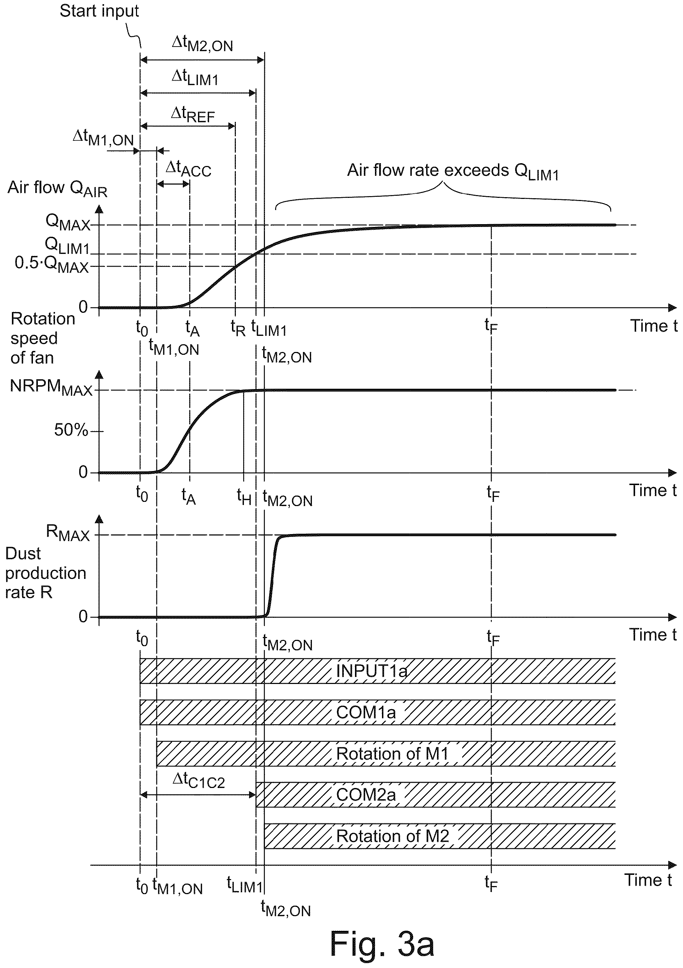

Fig. 3a shows, by way of example, temporal evolution of air flow rate Q_{AIR}, temporal evolution of rotation speed of the suction fan FAN1, dust production rate R, existence of a start input INPUT1a, existence of a start signal COM1a, rotation status of the motor M1, existence of a permission signal COM2a, and rotation status of the motor M2.

A user input INPUT1a for starting rotation of the motor M2 of the power tool TOOL1 may be received at the time t₀. The user input INPUT1a is herein called as the start input. The start input INPUT1a may start to exist at the time t₀. A user may provide the start input INPUT1a e.g. by moving a manual control element UIF2a from a first position to a second position. A user may provide the start input INPUT1a e.g. by pressing a button of user interface UIF2 of the power tool TOOL1. The button may be a latching control element or a non-latching control element. The start input INPUT1a may start to exist when the user starts to press the button. The start input INPUT1a may continue to exist when the button is in the depressed state. The start input INPUT1a may cease to exist when the user stops pressing the button, i.e. when the user releases the button. The start of the start input INPUT1 may be a command to start rotation of the motor M2 of the power tool TOOL1. The existence of the start input INPUT1a may be a command to start or continue rotation of the motor M2. The stop of the start input INPUT1a may be a command to stop or prevent rotation of the motor M2.

The control unit CNT2 of the power tool TOOL1 may be arranged to start or continue rotation of the motor M2 only if the permission signal COM2a is received from the dust extractor 500.

The control unit CNT2 of the power tool TOOL1 may start to send a start request signal COM1a in response to the start input INPUT1a at the time t₀. The start request signal COM1a is herein called as the start signal. The power tool TOOL1 may almost immediately (e.g. at the time t₀) send the start request signal COM1a to the dust extractor 500 via the communication link LINK1.

The control unit CNT2 may continue sending the start signal COM1a as long as the start input INPUT1a exists. The control unit CNT2 may stop sending the start signal COM1a when the start input INPUT1a ceases to exist.

The control unit CNT1 of the dust extractor 500 may receive the start signal COM1a via the communication link LINK1 The control unit CNT1 may start rotation of the motor M1 of the suction fan FAN1 in response to the start signal COM1a at the time t_{M1,ON}.

The control unit CNT1 of the dust extractor 500 may send the permission signal COM2a in response to the start signal COM1a in a delayed manner. The symbol Δt_{C1C2} may denote the time delay Δt_{C1C2} between the start of the start signal COM1a and the start of the permission signal COM2a. The time delay Δt_{C1C2} may ensure that at least some air flow AIR1 exists before starting the rotation of the motor M2 of the power tool TOOL1. The time delay Δt_{C1C2} may reduce or avoid emission of a harmful dust plume when starting rotation of the motor M2 of the power tool TOOL1. The time delay Δt_{C1C2} may have e.g. a predetermined value or the time delay Δt_{C1C2} may be determined based on a signal of an air flow rate sensor FSEN1 of the apparatus 1000. The time delay Δt_{C1C2} may be determined e.g. such that the air flow rate Q_{AIR} reaches a limit value Q_{LIM1} when transmission of the permission signal COM2a is started.

The control unit CNT1 may start rotation of the motor M1 and the suction fan FAN1 at the time t_{M1,ON}. The control unit CNT1 may start the rotation by sending a control signal to the motor driving unit MDU1 of the dust extractor 500. The motor M1 and the suction fan FAN1 may start to accelerate from a stopped state at the time t_{M1,ON}. The rotation speed NRPM of the accelerating suction fan FAN1 may reach 50% of the maximum rotation speed NRPM_{MAX} of the suction fan FAN1 at a time t_{A}. The rotation speed NRPM of the accelerating suction fan FAN1 may reach a maximum rotation speed NRPM_{MAX} of the suction fan FAN1 at the time t_{H}.

The rotating suction fan FAN1 operates as a pump, which removes air away from the internal space SPC2 and from the inlet chamber CHM1 of the dust extractor 500 via the outlet OUT1. The rotating suction fan FAN1 may reduce the internal pressure p₁, p₂ of the dust extractor 500 by removing air away from the internal spaces CHM1, SPC2. The resulting pressure difference (p₀-p₁) between the ambient pressure p₀ and the internal pressure p₁ may cause the air flow AIR1 from the power tool TOOL1 to the dust extractor 500 via the inlet IN1.

The air flow rate Q_{AIR} drawn via the dust extractor 500 may start to increase from zero at the time t_{M1,ON}. The air flow rate Q_{AIR} may reach 50% of a maximum air flow rate Q_{MAX} of the inlet IN1 at a time t_{R}. The air flow rate Q_{AIR} may reach a limit value Q_{LIM1} at a time t_{LIM1}. The air flow rate Q_{AIR} via the dust extractor 500 may be higher than the limit value Q_{LIM1} after the time t_{LIM1}.

The air flow rate Q_{AIR} may reach a maximum value Q_{MAX} at a time t_{F}. The rotation speed NRPM of the suction fan FAN1 may reach a maximum rotation speed NRPM_{MAX} at the time t_{H}. The rotation speed may reach the maximum NRPM_{MAX} earlier, and the air flow rate Q_{AIR} may reach the maximum Q_{MAX} later. The time t_{F} may be after the time t_{H}. After reaching the maximum rotation speed, the fan FAN1 may still need to remove some air from the internal spaces SPC2, CHM1 before the pressure difference (p₀-p₁) reaches its maximum.

The symbol R may denote the dust production rate of the power tool TOOL1, i.e. the rate of producing dust with the power tool TOOL1 during active processing of the workpiece OBJ1. The symbol R_{MAX} may denote the maximum dust production rate. The unit of the dust production rate R may be e.g. g/s (i.e. grams per second). The dust production rate R may be zero when the motor M2 is in the stopped state. The dust production rate R may reach a maximum value R_{MAX} when the motor M2 is rotating and the processing element ABR1 is pressed against the workpiece OBJ1.

The symbol t₀ may denote the start time of the start input INPUT1a. The symbol t_{M1,ON} may denote the start time of rotation of the motor M1. The symbol t_{A} may denote the time when the rotation speed of the fan FAN1 reaches 50% of the maximum rotation speed NRPM_{MAX} of the fan FAN1. The symbol t_{R} may denote the time when the air flow rate Q_{AIR} via the input IN1 reaches the 50% of the maximum air flow rate Q_{MAX}. The symbol t_{LIM1} may denote the time when the air flow rate Q_{AIR} via the input IN1 reaches the limit value Q_{LIM1}. The symbol t_{M2,ON} may denote the start time of rotation of the motor M2. The symbol t_{H} may denote the time when the rotation speed of the fan FAN1 reaches the maximum rotation speed NRPM_{MAX} of the fan FAN1. The symbol t_{F} may denote the time when the air flow rate Q_{AIR} via the input IN1 reaches the maximum air flow rate Q_{MAX}. The symbol Δt_{M2,ON} may denote the time interval between the times t₀ and t_{M2,ON}. The symbol Δt_{LIM1} may denote the time interval between the times t₀ and t_{LIM1}. The symbol Δt_{REF} may denote the time interval between the times t₀ and t_{R}. The symbol Δt_{ACC} may denote the time interval between the times t₀ and t_{A}. The symbol Δt_{C1C2} may denote the time interval between the start time of the start signal COM1a and the start time of the permission signal COM2a.

The power tool TOOL1 may be optionally arranged to provide an indication to the user when the start input INPUT1 is received via the user interface UIF2 of the power tool TOOL1. The indication may be e.g. an audio, visual and/or haptic indication. However, the time delay between receiving the start input INPUT1 and starting rotation of the motor M2 may be so short that it is not necessary to separately confirm receipt of the start input INPUT1. In other words, starting the rotation of the motor M2 may serve as an indication to the user that the start procedure of the apparatus 1000 has been executed successfully.

In an embodiment, the apparatus 1000 may comprise a flow sensor FSEN1 to measure an air flow rate Q_{AIR} of the apparatus 1000. The control unit CNT1 of the dust extractor 500 may be arranged to send the permission signal COM2a to the power tool TOOL1 via the communication link LINK1 only if a signal S_{FSEN1} of the flow sensor FSEN1 indicates that the air flow rate Q_{AIR} is greater than or equal to a first limit value LIM1.

In an embodiment, the time delay Δt_{C1C2} between receiving the start signal COM1a and sending the permission signal COM2a may be e.g. greater than or equal to a time interval Δt_{LIM1} needed for increasing an air flow rate Q_{AIR} of the apparatus 1000 from zero to a limit value Q_{LIM1}.

In an embodiment, the time delay Δt_{C1C2} between receiving the start signal COM1a and sending the permission signal COM2a may be e.g. greater than or equal to a reference time interval Δt_{REF} needed for increasing an air flow rate Q_{AIR} of the apparatus 1000 from zero to 50% of a maximum air flow rate Q_{MAX} of the apparatus 1000.

In an embodiment, the time delay Δt_{C1C2} between receiving the start signal COM1a and sending the permission signal COM2a may be e.g. greater than or equal to a time interval Δt_{ACC} needed for the suction fan FAN1 to accelerate from a stopped state to 50% of a maximum rotation speed NRPM_{MAX} of the suction fan FAN1.

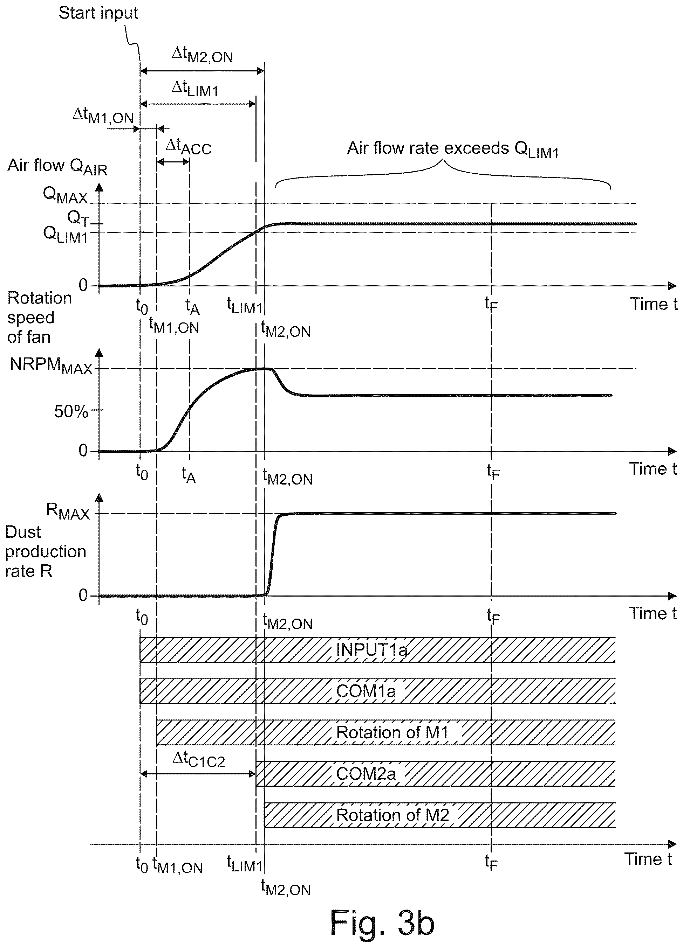

Referring to Fig. 3b, the dust extractor 500 may also be arranged to adjust the air flow rate Q_{AIR} to a target value Q_{T}, which is smaller than the maximum air flow rate Q_{MAX}. The control unit CNT1 of the dust extractor 500 may adjust rotation speed NRPM of the suction fan FAN1 based on the signal of the air flow rate sensor FSEN1, so as to keep the air flow rate Q_{AIR} substantially equal to the target value Q_{T}. The target value Q_{T} may be e.g. in the range of 20% to 80% of the maximum air flow rate Q_{MAX}. Limiting the air flow rate may e.g. reduce power consumption and/or acoustic noise of the dust extractor 500.

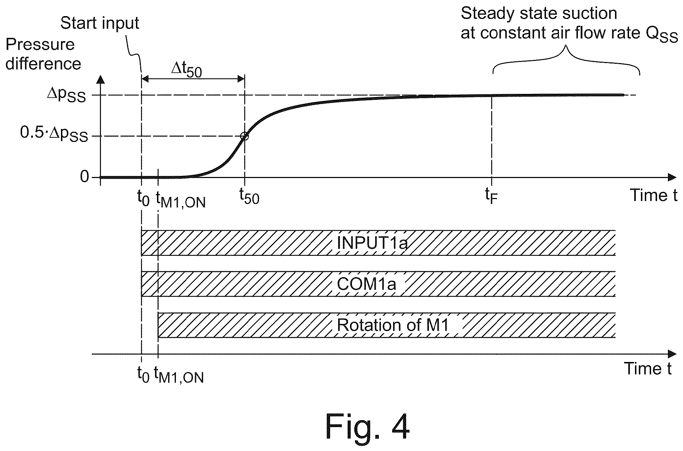

Referring to Fig. 4, the pressure difference (Δp=p₀-p₁) between the ambient pressure p₀ and the pressure p₁ of the dust collection chamber CHM1 may reach a steady-state value Δp_{SS} during steady state operation. In other words, the steady-state value Δp_{SS} is the pressure difference (Δp=p₀-p₁) between the ambient pressure p₀ and the pressure p₁ of the dust collection chamber CHM1 during a steady state operation where the pressure difference (Δp=p₀-p₁) remains constant and where the air flow rate Q_{AIR} via the dust extractor 500 remains constant. The symbol Qss may denote the air flow rate Q_{AIR} during the steady state operation.

Rotation of the suction fan FAN1 may be started at the time t₀. The pressure difference (Δp=p₀-p₁) between the ambient pressure p₀ and the pressure p₁ of the inlet chamber CHM1 may reach 50% of the steady-state value Δp_{SS} at the time t₅₀. The symbol Δt₅₀ may refer to the time interval between the times t₀ and t₅₀.

In an embodiment, the time delay Δt_{C1C2} may be selected to be e.g. greater than or equal to the time interval Δt₅₀. The time delay Δt_{C1C2} between receiving the start signal COM1a and sending the permission signal COM2a may be e.g. greater than or equal to the reference time interval Δt₅₀. The reference time interval Δt₅₀ may be selected e.g. such that a pressure difference p₀-p₁ between the ambient pressure p₀ and a pressure of the inlet chamber CHM1 reaches 50% of the steady-state value Δp_{SS} at the end of the reference time interval Δt₅₀ in a reference situation where ambient air is drawn directly into the inlet IN1 without the hose HOSE1.

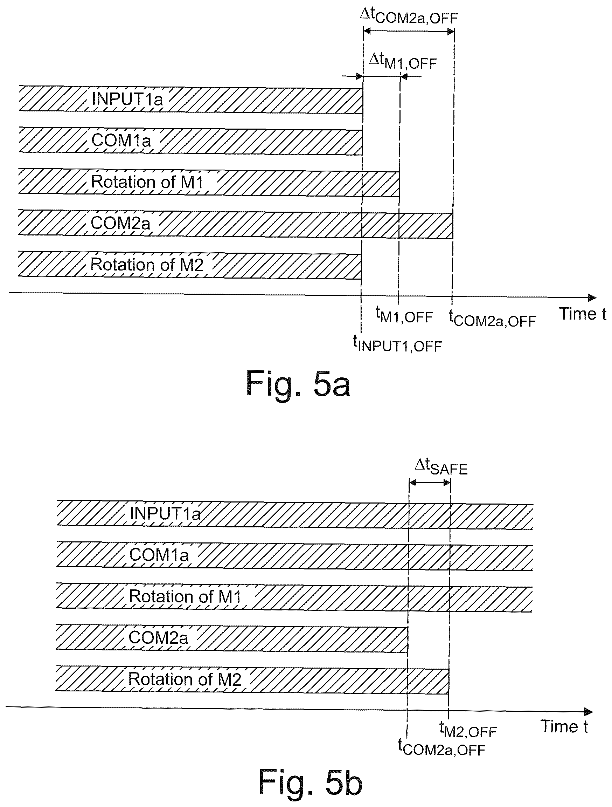

Fig. 5a shows, by way of example, a normal stopping procedure for the power tool TOOL1. The existence of the start input INPUT1 may stop at the time t_{INPUT1,OFF}. For example, the user may e.g. release a control button UIF2a of the user interface UIF2 of the power tool TOOL1 at the time t_{INPUT1,OFF}. The stopping of the existence of the start input INPUT1 may be interpreted to be a command to stop rotation of the motor M2 of the power tool TOOL2. The control unit CNT2 of the power tool TOOL1 may stop rotation of the motor M2 immediately at the time t_{INPUT1,OFF}, or in a slightly delayed manner.

The control unit CNT2 of the power tool TOOL1 may stop transmission of the start signal COM1a to the dust extractor 500, in response to stopping the start input INPUT1 at the time t_{INPUT1,OFF}. The control unit CNT1 of the dust extractor 500 may determine that transmission of the start signal COM1a has been stopped, and the control unit CNT1 may stop rotation of the motor M1 of the suction fan FAN1 at the time t_{M1,OFF}. The symbol Δt_{M1,OFF} may denote a time interval between stopping the signal COM1a and stopping rotation of the motor M1. The time interval Δt_{M1,OFF} may be selected to ensure that substantially all dust DUST1 generated during the shutdown may be extracted with the air flow AIR1. The time interval Δt_{M1,OFF} may be e.g. in the range of 1 s to 60 s.

The control unit CNT2 may stop transmission of the permission signal COM2a at the time t_{COM2a,OFF}. The control unit CNT2 may stop transmission of the permission signal COM2a after a predetermined delay Δt_{COM2a,OFF}, or when the air flow rate Q_{AIR} measured by a flow sensor FSEN1 falls below the limit value Q_{LIM1}.

Fig. 5b shows, by way of example, a stopping procedure for the power tool TOOL1 in case of a fault. Reception of the permission signal at the power tool TOOL1 may stop at the time t_{COM2a,OFF}.

The power tool TOOL1, in particular the control unit CNT2, may be arranged to stop rotation of the motor M2 of the power tool TOOL1 at the end of a safety time period Δt_{SAFE} if the motor M2 is rotating but the permission signal COM2a is not received from the dust extractor 500 during said safety time period Δt_{SAFE}. The safety time period Δt_{SAFE} may be e.g. in the range of 0.2 s to 1 s.

Possible reasons for the fault-based stopping may include e.g:
- The air flow rate Q_{AIR} falls below the limit value Q_{LIM1} due to blocking of the air flow AIR1,
- The air flow rate Q_{AIR} falls below the limit value Q_{LIM1} due to a problem with the motor M1, the fan FAN1, or the motor driving unit MDU1,
- The air flow rate Q_{AIR} falls below the limit value Q_{LIM1} due to an interruption of electric power (e.g. if the dust extractor is accidentally disconnected from the mains MAINS1),
- Radio-frequency interference prevents successful transmission of the signal COM1a and/or COM2a,
- a fault in the communication unit RXTX1 and/or RXTX2 prevents successful transmission of the signal COM1a and/or COM2a.

The power tool TOOL1 may be arranged to provide an alarm indication to the user if the motor M2 of the power tool TOOL1 is rotating but the permission signal COM2a is not received from the dust extractor 500. The indication may be e.g. an audio, visual and/or haptic indication.

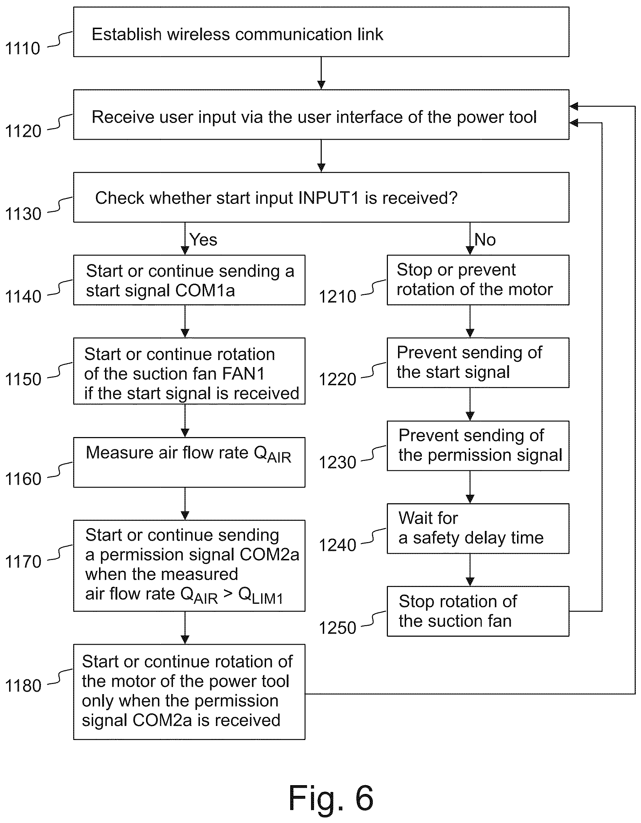

Fig. 6 shows, by way of example, method steps for controlling rotation of the motors M1, M2 such that emission of a dust plume may be reduced or avoided.

The communication link LINK1 between the power tool TOOL1 and the dust extractor 500 may be established in step 1110. The user input may be received via the user interface UIF2 of the power tool TOOL1 in step 1120. The method may comprise checking whether start input INPUT1 is received via the user interface UIF2 in step 1130.

The power tool TOOL1 may start or continue sending the start signal COM1a if start input INPUT1 is received (step 1140). The dust extractor 500 may start or continue rotation of the suction fan FAN1 if the dust extractor 500 receives the start signal COM1a in step 1150. The dust extractor 500 may measure the air flow rate Q_{AIR} in step 1160. The dust extractor 500 may start or continue sending the permission signal COM2a e.g. if the measured air flow rate Q_{AIR} is greater than or equal to the limit value Q_{LIM1} (step 1170). The power tool TOOL1 may start or continue rotation of the motor M2 only if the power tool receives the permission signal COM2a in step 1180.

New user input may be received again in step 1120. Existence of the start input INPUT1 may be checked again in step 1130. The apparatus 1000 may start a shutdown procedure if existence of the start input INPUT1 is stopped. The power tool TOOL1 may stop rotation of the motor M2 if the start input INPUT1 does not exist in step 1210. The power tool TOOL1 may prevent sending the start signal COM1a if the start input INPUT1 does not exist in step 1220. The dust extractor 500 may prevent sending the permission signal COM2a if the dust extractor 500 does not receive the start signal COM1a in step 1230. The dust extractor 500 may wait for a safety delay time in step 1240. Rotation of the suction fan FAN1 may be stopped in a delayed manner after the safety delay time in step 1250. New user input may be received again in step 1120.

Existence of the start input INPUT1 may be checked again in step 1130. The above-mentioned acts of the dust extractor 500 may be performed by the control unit CNT1 of the dust extractor. The above-mentioned acts of the power tool TOOL1 may be performed by the control unit CNT2 of the power tool TOOL1. The signals COM1a, COM2a may be communicated via the communication link LINK1.

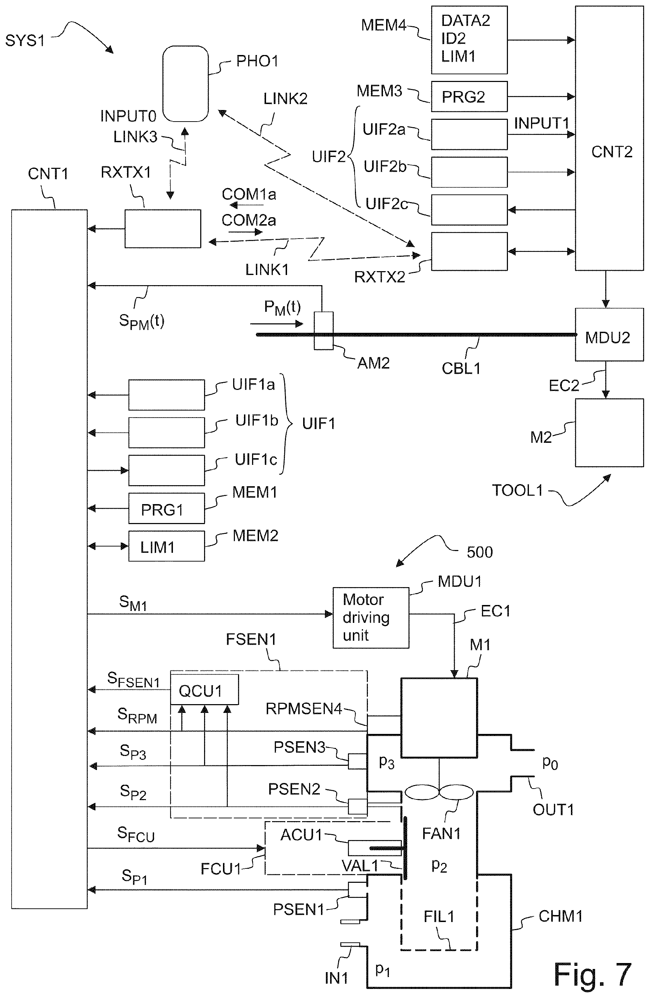

Fig. 7 shows, by way of example, a control system SYS1 of the apparatus 1000.

The dust extractor 500 may comprise the control unit CNT1, the motor driving unit MDU1, the communication unit RXTX1, and the user interface UIF1. The control system SYS1 may comprise the control unit CNT1, the motor driving unit MDU1, the communication unit RXTX1, and the user interface UIF1. The control unit CNT1 may form a control signal S_{M1} for controlling operation of the motor driving unit MDU1, for controlling rotation of the motor M1, and for controlling rotation of the suction fan FAN1. The motor driving unit MDU1 may form electric currents EC1 for driving the motor M1.

The power tool TOOL1 may comprise the control unit CNT2, the motor driving unit MDU2, the communication unit RXTX2, and the user interface UIF2. The control system SYS1 may comprise the control unit CNT2, the motor driving unit MDU2, the communication unit RXTX2, and the user interface UIF2. The control unit CNT2 may form a control signal S_{M2} for controlling operation of the motor driving unit MDU2 and for controlling rotation of the motor M2. The motor driving unit MDU1 may form electric currents EC2 for driving the motor M2.

The start input INPUT1 may be received via the user interface UIF2. The user interface UIF2 may comprise user interface devices UIF2a, UIF2b, UIF2c for receiving user input from the user and/or for providing information to the user. The user interface device UIF2a may be e.g. an input device for receiving the start input INPUT1. The user interface device UIF2b may be e.g. an input device for selecting a target rotation speed of the motor M2. The user interface device UIF2c may be e.g. an output device for providing information to the user, e.g. by providing a visual and/or audio indication.

The power tool TOOL1 may comprise a memory MEM3 for storing computer program code PRG2. The control unit CNT2 may be configured to carry out the present method by executing the computer program code PRG2.

The power tool TOOL1 may comprise a memory MEM4 for storing data DATA2, ID2, LIM1. The data ID2 may specify e.g. an identifier of the power tool TOOL1. The data DATA2 may specify e.g. a limit value LIM1 for the air flow rate Q_{AIR} and/or a suitable target air flow rate Q_{T} for the power tool TOOL1. The memory MEM4 may store the limit value LIM1. The control system SYS1 may comprise the memory MEM3, MEM4.

The communication unit RXTX2 of the power tool TOOL1 and the communication unit RXTX1 of the dust extractor 500 may establish a communication link LINK1. The start signal COM1a may be sent via the link LINK1. The control unit CNT2 of the power tool TOOL1 may send the start signal COM1a via the link LINK1. The permission signal COM2a may be sent via the link LINK1. The control unit CNT1 of the dust extractor 500 may send the permission signal COM2a via the link LINK1.

The communication units RXTX1 and RXTX2 may establish a wireless communication link LINK1 for sending the start signal COM1a and the permission signal COM2a. The wireless communication link LINK1 may be established directly between the communication units RXTX1 and RXTX2 or indirectly via an auxiliary communication device PHO1. The auxiliary communication device PHO1 may be e.g. a mobile phone or wireless communication hub. The link LINK1 may comprise a partial link LINK2 between the communication unit RXTX2 and the device PHO1, and another partial link LINK3 between the device PHO1 and the communication unit RXTX1.

The control system SYS1 may further comprise the flow sensor FSEN1 for measuring a flow rate Q_{AIR} of the air flow AIR1 drawn via the dust extractor 500. The flow sensor FSEN1 may form a flow rate signal S_{FSEN1} indicative of the measured air flow rate Q_{AIR} of the air flow AIR1 drawn via the dust extractor 500. The flow rate signal S_{FSEN1} may be e.g. indicative of the flow rate drawn via the suction fan FAN1 and/or via the inlet IN1.

The control unit CNT1 may control sending of the permission signal COM2a e.g. according to a predetermined delay time and/or based on the flow rate signal SFSEN1.

The motor driving unit MDU1 may be arranged to form a rotation speed signal S_{RPM} indicative of the rotation speed of the motor M1. The dust extractor 500 may comprise pressure sensors PSEN1, PSEN2, PSEN3 to form pressure signals S_{P1}, S_{P2}, S_{P3} indicative of the measured pressures p₁, p₂, p₃. p₁ may denote the pressure of the inlet chamber CHM1. p₂ may denote the pressure of the space SPC2 between the filter FIL1 and the suction fan FAN1. p₃ may denote a downstream pressure of the fan FAN1. The pressure sensor PSEN3 may also be arranged to measure the ambient pressure p₀ (i.e. p₃ may be equal to p₀).

The flow sensor FSEN1 may be arranged to calculate the air flow rate Q_{AIR} from a measured pressure difference (Δp) across the suction fan FAN1 and from a rotation speed NRPM of the suction fan FAN1. The flow sensor FSEN1 may be arranged to calculate the air flow rate Q_{AIR} e.g. from the measured rotation speed NRPM of the motor M1 and from the measured pressure difference (p₃-p₂) across the suction fan FAN1. The flow sensor FSEN1 may be arranged to form the flow rate signal S_{FSEN1} e.g. by calculating from the signals S_{RPM}, S_{P2}, S_{P3}. The flow sensor FSEN1 may comprise a calculation unit QCU1 for performing calculations for the flow rate signal. The calculation unit QCU1 may also be implemented by executing computer program code with the control unit CNT1.

The flow sensor FSEN1 may also be implemented e.g. by guiding at least a part of the flow via a venturi tube or by using a pitot tube. The flow rate may be calculated from measured pressures of the venturi tube or from measured pressures of the pitot tube. The flow sensor FSEN1 may comprise e.g. two or more pressure sensors PSEN1, PSEN2 for measuring the air flow rate Q_{AIR}.

The user interface UIF1 may comprise one or more user interface devices UIF1a, UIF1b, UIF1c for receiving user input from a user and/or for providing information to the user. The user interface UIF1 of the dust extractor 500 may comprise one or more input devices UIF1a, UIF1b. The input device UIF1a, UIF1b may comprise e.g. one or more push buttons, a rotatable knob and/or a touchscreen. The user interface UIF1 may be arranged to receive user input from a user to the control unit CNT1. The user interface UIF1 may comprise one or more output devices UIF1c for providing information to the user. The output device UIF1c may be arranged to provide e.g. visual indicator and/or an audio signal. The user may e.g. select an operating mode of the dust extractor by providing user input via the user interface UIF1. The user interface UIF2 may comprise e.g. an input device UIF1a for setting a target air flow rate Q_{T}. The user interface UIF2 may comprise e.g. an input device UIF1b for setting an operating mode of the dust extractor 500. The dust extractor 500 may have e.g. a first operating mode where the suction fan FAN1 rotates continuously. The dust extractor 500 may have e.g. a second operating mode where rotation of the suction fan FAN1 is controlled based on the start signal COM1a.

In an embodiment, the apparatus 1000 may be configured to determine the first limit value LIM1 based on user input (INPUT0) received via a user interface. The user interface may be e.g. a user interface UIF2 of the power tool TOOL1, a user interface UIF1 of the dust extractor 500 and/or a user interface of the auxiliary communication unit PHO1.

In an embodiment, the apparatus 1000 may be configured to determine the first limit value LIM1 from parameter data DATA2 received from the power tool TOOL1 to the dust extractor 500 via the communication link LINK1.

The dust extractor 500 may comprise a memory MEM1 for storing computer program code PRG1. The control unit CNT1 may be configured to carry out the present method by executing the computer program code PRG1. The dust extractor 500 may comprise a memory a memory MEM2 for storing a limit value LIM1. The dust extractor 500 may comprise the memory MEM1, MEM2.

The control system SYS1 may comprise the motor driving unit MDU1 for driving the motor M1 according to the motor control signal S_{M1}. The motor driving unit MDU1 may provide one or more electric currents EC1 to the motor M1 according to the motor control signal S_{M1}. The control unit CNT1 may form the motor control signal S_{M1} for the motor driving unit MDU1. The motor driving unit MDU1 may start or stop rotation of the motor M1 based on the motor control signal S_{M1}. The motor driving unit MDU1 may e.g. start and stop rotation of the motor M1 and rotation of the suction fan FAN1 based on the motor control signal S_{M1}.

The control system SYS1 may comprise the motor driving unit MDU2 for driving the motor M2 according to the motor control signal S_{M2}. The motor driving unit MDU2 may provide one or more electric currents EC2 to the motor M2 according to the motor control signal S_{M2}. The motor driving unit MDU2 may start or stop rotation of the motor M2 based on the motor control signal S_{M2}. The control unit CNT2 may form the motor control signal S_{M2} for the motor driving unit MDU2 for starting and stopping rotation of the motor M2. The motor driving unit MDU2 may provide one or more electric currents EC2 in response to the motor control signal S_{M2}. The motor driving unit MDU2 may comprise e.g. a relay to switch on and off one or more driving currents EC2 of the motor M2. The motor driving unit MDU2 may comprise e.g. one or more electromechanical relays, thyristors and/or transistors for controlling one or more operating currents of the motor M2. The motor driving unit MDU2 may comprise e.g. a microcontroller, gate drivers and transistors to form the one or more driving currents EC2. The motor driving unit MDU2 may be arranged to adjust one or more driving currents EC2 by pulse width modulation or by phase fired control. The motor driving unit MDU2 may comprise e.g. a frequency converter to adjust the frequency of one or more driving currents EC2. The motor driving unit MDU2 may comprise a frequency converter for reducing or increasing the rotation speed of the motor M2.

The apparatus 1000 may optionally comprise a metering unit AM2 for monitoring electric power P_{M}(t) and/or electric current of the power tool TOOL1. However, monitoring the electric power P_{M}(t) is not necessary when using the signals COM1a, COM2a. The control system SYS1 may optionally comprise the metering unit AM2 for measuring an electric current and/or electric power P_{M}(t) drawn by the power tool TOOL1. The current metering unit AM2 may form a signal S_{PM}(t) indicative of the electric current and/or electric power P_{M}(t) drawn by the power tool TOOL1. The magnitude of the electric current and/or electric power P_{M}(t) may be an indication of an operating status of the power tool TOOL1. The signal S_{PM}(t) may be indicative of the operating status of the power tool TOOL1.

The dust extractor 500 may optionally comprise a filter cleaning unit FCU1. The filter cleaning unit FCU1 may remove dust particles DUST1 from the filter FIL1 e.g. by shaking the filter FIL1 and/or by forming a reverse flow pulse. The filter cleaning unit FCU1 may comprise e.g. a valve VAL1 for forming a reverse flow pulse. The valve VAL1 may be actuated by an actuator ACU1. The control unit CNT1 may form a control signal S_{FCU} for controlling operation of the filter cleaning unit FCU1. In particular, the actuator ACU1 may open and/or close the valve VAL1 based on the signal S_{FCU}.

Referring to Figs. 8a and 8b, the first communication unit RXTX1 may establish the communication link LINK1 with the second communication unit RXTX2 also via wired communication. The communication link LINK1 may be implemented e.g. via a cable CBL1 or CBL2.

Referring to Fig. 8a, the communication link LINK1 may be implemented e.g. via a data cable CBL2. The data cable CBL2 may be e.g. an electrical cable or an optical cable. The data cable CBL2 may be detachable. The data cable CBL2 may be connected to the dust extractor 500 e.g. via a data connector CON2. The data connector CON2 of the cable CBL1 may be connected e.g. to a data connector CON1 of the dust extractor 500. The start signal COM1a and the permission signal COM2a may be transmitted via the data cable CBL2 e.g. by using serial communication and/or by using parallel communication. Serial communication may be implemented e.g. by using one of the following protocols: Universal Serial Bus (USB), Ethernet, CAN, I²S, RS-485, DMX512.

Referring to Fig. 8b, the communication link LINK1 may be implemented e.g. via the electric power cable CBL1 of the power tool TOOL1. The signals COM1a, COM2 and the electric power of the power tool TOOL1 may be transmitted via the same electric cable CBL1. The same electric wires W10,W11 of the cable CBL1 may carry the electric power of the motor M2 and the signals COM1a, COM2a. The first communication unit RXTX1 may be arranged to couple the permission signal COM2a to the cable CBL1, and the second communication unit RXTX2 may be arranged to receive the permission signal COM2a from the cable CBL1. The second communication unit RXTX2 may be arranged to couple the start signal COM1a to the cable CBL1, and the first communication unit RXTX1 may be arranged to receive the start signal COM1a from the cable CBL1. The signals COM1a, COM2a may be transmitted by using power-line communication. The signals COM1a, COM2a may be transmitted via the power cable e.g. by using one of the following protocols: G3-PLC, PRIME, HPLC, Nessum WIRE, G.hn, HomePlug. The dust extractor 500 may optionally comprise an electric filter EMCF1 to prevent propagation of the signals COM1a, COM2a to the mains network MAINS1. The electric filter EMCF1 may comprise e.g. capacitors and/or inductors to suppress electrical interference generated by the communication units RXTX1, RXTX2.

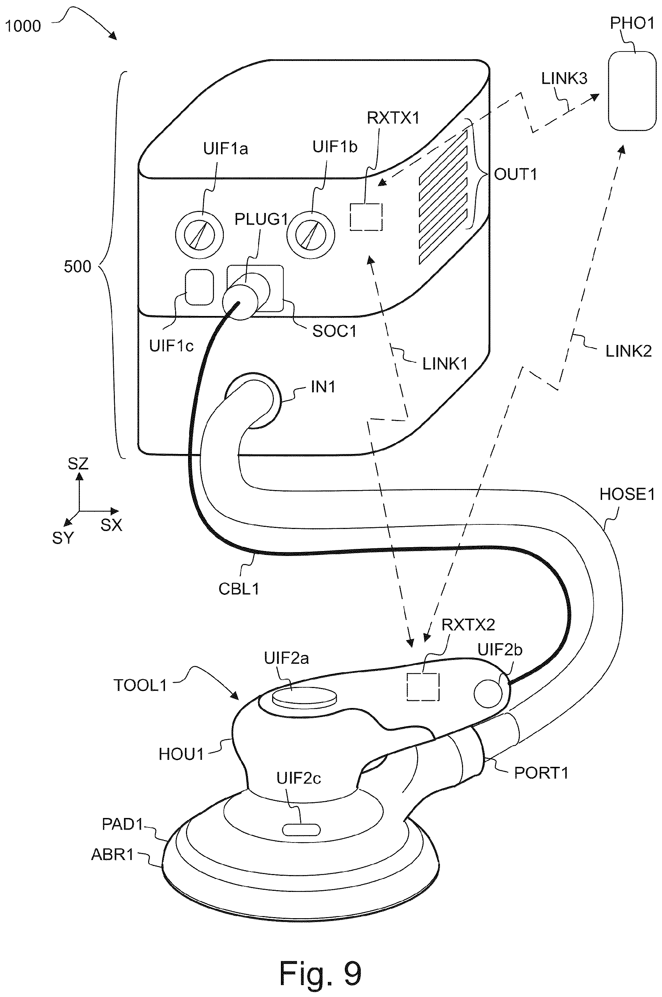

Fig. 9 shows, by way of example, in a three-dimensional view, the apparatus 1000. The apparatus 1000 comprises the dust extractor 500 and optionally the power tool TOOL1. The dust extractor 500 may draw the dust-laden air flow AIR1 from the power tool TOOL1 via the hose HOSE1. The communication link LINK1 may be established directly between the communication units RXTX1, RXTX2 or via an auxiliary communication unit PHO1. The motor M2, the control unit CNT2, the motor driving unit MDU2, and/or the communication unit RXTX2 may be located in a housing HOU1 of the power tool TOOL1. The symbols SX, SY, SZ denote orthogonal directions.

For the person skilled in the art, it will be clear that modifications and variations of the devices and methods according to the present invention are perceivable. The figures are schematic. The particular embodiments described above with reference to the accompanying drawings are illustrative only and not meant to limit the scope of the invention, which is defined by the appended claims.

## Claims

1. An apparatus (1000) comprising a dust extractor (500) to extract dust particles (DUST1) formed by processing a workpiece (OBJ1) with a power tool (TOOL1), wherein the dust extractor (500) comprises a first motor (M1), a suction fan (FAN1), a first communication unit (RXTX1), and a first control unit (CNT1), wherein the first communication unit (RXTX1) is arranged to establish a communication link (LINK1) with a second communication unit (RXTX2) of the power tool (TOOL1),
wherein the first control unit (CNT1) is arranged to receive a start signal (COM1a) from the power tool (TOOL1) via the communication link (LINK1),
wherein the first control unit (CNT1) is arranged to start rotation of the suction fan (FAN1) based on the received start signal (COM1a),
wherein the suction fan (FAN1) is arranged to draw an air flow (AIR1) via the apparatus (1000), and wherein the first control unit (CNT1) is arranged to send a permission signal (COM2a) to the power tool (TOOL1) via the communication link (LINK1) after rotation of the suction fan (FAN1) has been started, in order to allow a motor (M2) of the power tool (TOOL1) to start rotating.

2. The apparatus (1000) of claim 1, wherein a time delay (Δt_{C1C2}) between receiving the start signal (COM1a) and sending the permission signal (COM2a) is in a range of 0.2 s to 5 s.

3. The apparatus (1000) of claim 1 or 2, wherein a time delay (Δt_{C1C2}) between receiving the start signal (COM1a) and sending the permission signal (COM2a) is greater than or equal to a time (Δt_{ACC}) needed for the suction fan (FAN1) to accelerate from a stopped state to 50% of a maximum rotation speed (NRPM_{MAX}) of the suction fan (FAN1).

4. The apparatus (1000) of claim 1 or 2, wherein a time delay (Δt_{C1C2}) between receiving the start signal (COM1a) and sending the permission signal (COM2a) is greater than or equal to a reference time interval (Δt_{REF}) needed for increasing an air flow rate (Q_{AIR}) of the apparatus (1000) from zero to 50% of a maximum air flow rate (Q_{MAX}) of the apparatus (1000).

5. The apparatus (1000) of claim 1 or 2, further comprising a flow sensor (FSEN1), wherein the flow sensor (FSEN1) is arranged to measure an air flow rate (Q_{AIR}) of the apparatus (1000), wherein the first control unit (CNT1) of the dust extractor (500) is arranged to send the permission signal (COM2a) to the power tool (TOOL1) via the communication link (LINK1) only if a signal (S_{FSEN1}) of the flow sensor (FSEN1) indicates that the air flow rate (Q_{AIR}) is greater than or equal to a first limit value (Q_{LIM1}).

6. The apparatus (1000) of claim 5, being configured to determine the first limit value (Q_{LIM1}) from parameter data (DATA2) received from the power tool (TOOL1) to the dust extractor (500) via the communication link (LINK1).

7. The apparatus (1000) of claim 5, being configured to determine the first limit value (LIM1) based on user input (INPUT0) received via a user interface.

8. The apparatus (1000) according to any of the claims 1 to 7, wherein the dust extractor (500) is arranged to set a target air flow rate (Q_{T}) of the dust extractor (500) based on parameter data (DATA2) received from the power tool (TOOL1) via the communication link (LINK1).

9. The apparatus (1000) according to any of the claims 1 to 8, wherein the communication link (LINK1) is wireless, wherein the apparatus (1000) is arranged to establish the wireless communication link (LINK1) directly between the first communication unit (RXTX1) and the second communication unit (RXTX2) of the power tool (TOOL1), or indirectly via an auxiliary communication unit (PHO1).

10. The apparatus (1000) according to any of the claims 1 to 8, wherein the first communication unit (RXTX1) is arranged to establish the communication link (LINK1) via wired communication.

11. The apparatus (1000) according to any of the claims 1 to 10, further comprising the power tool (TOOL1), the power tool (TOOL1) comprising the user interface (UIF2) for receiving a start input (INPUT1), a second motor (M2), the second communication unit (RXTX2), and a second control unit (CNT2), wherein the second control unit (CNT2) of the power tool (TOOL1) is arranged to start rotation of the motor (M2) of the power tool (TOOL1) based on the start input (INPUT1) only if the permission signal (COM2a) is received from the dust extractor (500) to the power tool (TOOL1).

12. The apparatus (1000) of claim 11, wherein the power tool (TOOL1) is arranged to send the start signal (COM1a) to the dust extractor (500) in response to pressing a button (UIF2a) of the user interface (UIF2) of the power tool (TOOL1).

13. The apparatus (1000) according to any of the claims 1 to 12, wherein the power tool (TOOL1) is arranged to stop rotation of the motor (M2) of the power tool (TOOL1) at an end of a safety time period (Δt_{SAFE}) if the motor (M2) is rotating but the permission signal (COM2a) is not received from the dust extractor (500) during said safety time period (Δt_{SAFE}), the safety time period (Δt_{SAFE}) being advantageously in the range of 0.2 s to 1 s.

14. A method for processing a workpiece (OBJ1), the method comprising:
- forming dust (DUST1) by processing the workpiece (OBJ1) with a power tool (TOOL1),
- extracting the dust (DUST1) by using a dust extractor (500),
- sending a start signal (COM1a) from the power tool (TOOL1) to the dust extractor (500) via a communication link (LINK1) when a start input (INPUT1) is received via a user interface (UIF2) of the power tool (TOOL1),
- starting rotation of a suction fan (FAN1) of the dust extractor (500) based on the start signal (COM1a) received from the power tool (TOOL1),
- sending a permission signal (COM2a) from the dust extractor (500) to the power tool (TOOL1) via the communication link (LINK1) after the rotation of the suction fan (FAN1) has been started,
- starting rotation of a motor (M2) of the power tool (TOOL1) based on the start input (INPUT1) only if the permission signal (COM2a) is received to the power tool (TOOL1) from the dust extractor (500).

15. The method of claim 14, further comprising:
- measuring an air flow rate (Q_{AIR}) with a flow sensor (FSEN1),
- sending the permission signal (COM2a) from the dust extractor (500) to the power tool (TOOL1) via the communication link (LINK1),
wherein a time delay (Δt_{C1C2}) between receiving the start signal (COM1a) and sending the permission signal (COM2a) is in a range of 0.2 s to 5 s.
